# EUROPÄISCHE PATENTSCHRIFT

(11) **EP 1 392 537 B1**
(45) Veröffentlichungstag und Bekanntmachung des Hinweises auf die Patenterteilung: **13.10.2004**
(21) Anmeldenummer: 03739376.6
(22) Anmeldetag: 14.01.2003
(51) Int. Cl.: B60J 5/04

(54) **TÜR FÜR KRAFTFAHRZEUGE**
DOOR FOR MOTOR VEHICLES
PORTIERE D'AUTOMOBILE

(30) Priorität: 16.02.2002 DE 10206513
(43) Veröffentlichungstag der Anmeldung: 03.03.2004
(73) Patentinhaber: Nothelfer GmbH, D-88212 Ravensburg (DE)
(72) Erfinder: LÖSCH, Alfred, 66636 Tholey Hasborn (DE); HAUPENTHAL, Horst-Günter, 54411 Hermeskeil (DE); GLASEN, Uwe, 66629 Freisen (DE)
(74) Vertreter: Dahlkamp, Heinrich-Leo, Dipl.-Ing.
(86) Internationale Anmeldenummer: PCT/EP2003/000246
(87) Internationale Veröffentlichungsnummer: WO 2003/068545

(56) Entgegenhaltungen:
- EP-A- 1 013 867
- WO-A-01/32456
- DE-A- 4 022 179
- DE-A- 4 326 684
- DE-A- 19 854 775
- DE-A- 19 957 986
- DE-C- 19 810 643
- FR-A- 2 720 780

## Beschreibung

Die Erfindung betrifft eine Tür für Kraftfahrzeuge mit einem Türaußenblech und einem Türinnenblech gemäß Oberbegriff des Anspruches 1.

Die DE 199 57 986 A1 offenbart eine gattungsgemäße Kfz-Tür bestehend aus Außen- und Innenmodul, wobei ein erstes inneres Türmodul aus einem Türringrahmen und einer Türkasteninnenwand besteht, die als Modulträger für Anbauteile dient und ein zweites Türmodul als Türkastenaußenwand aus einem Trägerteil und einem damit verbundenen Außenblech besteht. Bei diesem Türkonzept ist eine sogenannte Drei-Ebenen-Gliederung der Tür mit einem Türaußenblech als Außenwand, dem aus Aluminium hergestellten Türringrahmen und einem Modulträger als Türkasteninnenwand erreicht. Ober die Anordnung der Türdichtung ist in dieser Schrift nichts gesagt.

Außerdem ist bereits ein Tür-Rohbau für ein Kraftfahrzeug bekannt, der in selbsttragender Schalenbauweise hergestellt ist. Bei diesem Türrohbau besteht die Außenhaut und die Innenschale in der Regel aus Stahl- oder Aluminiumblechen, die durch eine Tiefziehtechnik hergestellt sind. Als Verbindungstechnik wird in der Regel eine Punktschweißung und/oder eine Bördelfügung angewandt. Ein Türkörper des Türrohbaus kann mit oder ohne einem Fensterrahmen aufgebaut sein. Zusätzlich kann in dem Türkörper ein oder mehrere Aufprallträger integriert sein, um einen erhöhten Seitencrash-Schutz zu erreichen.

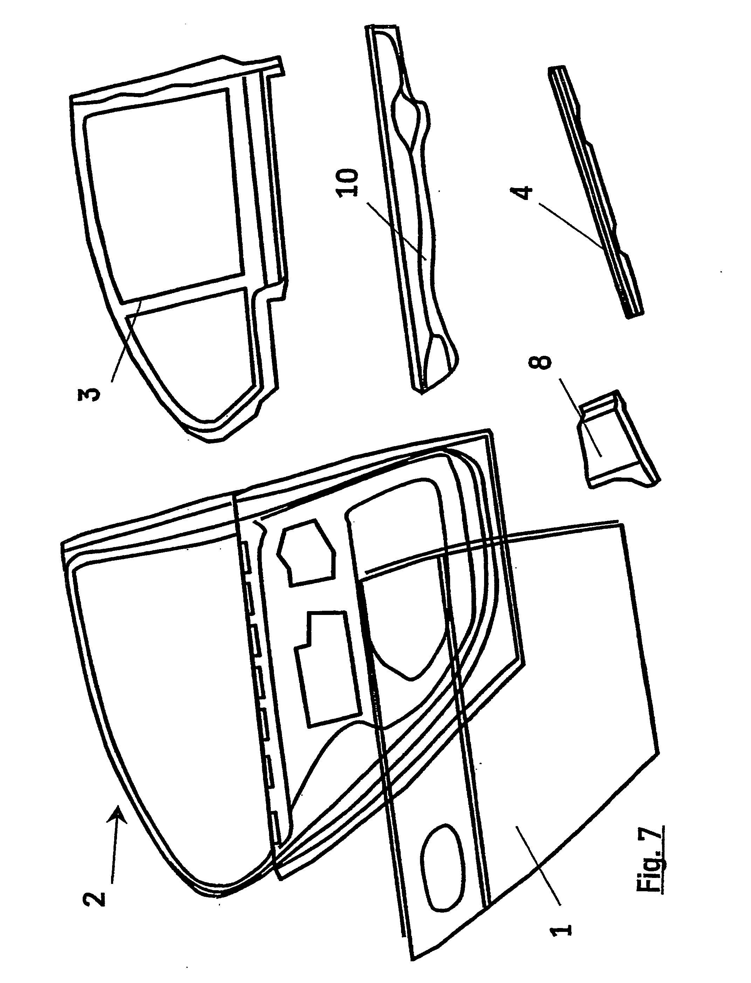

Die in Fig. 7 dargestellten, zum Stand der Technik gehörigen, einzeln durch Umformen hergestellten einzelnen Blechteile einer Tür für Kraftfahrzeuge werden nach konventionellem Konzept dauerhaft miteinander verbunden und nach dem Anbau an die Karosserie im Rohbau gemeinsam mit der Karosserie lackiert. In einem relativ aufwendigen Vorgang wird anschließend die türseitige Dichtung angeklebt. Der Einbau der üblichen Türaggregate in die lackierte und zu einer Einheit zusammengefügte Tür ist problematisch und nur mit großem Aufwand möglich. Bei Verwendung von schmutzabweisenden Lacken hat sich gezeigt, daß die Türdichtung kaum oder gar nicht mehr geklebt werden kann.

Aus der DE 199 36 175 A1 ist eine Tür für ein Kraftfahrzeug bekannt, die aus einer mittragenden, metallischen Innenblechkonstruktion und einer mittragenden Außenhaut aus Faserverbundwerkstoffen besteht. Dabei ist in der Außenhaut ein hochfester und hochsteifer Rahmen angeordnet, der eine den Crashanforderungen angepaßte Festigkeit aufweist. Außenhaut und Innenschale sollen dabei verkleidende und im Sinne von Strukturteilen nicht tragende Bauteile sein, die aber eine für die Altagstauglichkeit ausreichende Biegesteifigkeit aufweisen. Zur Iösbaren Befestigung von Innenschale und Außenhaut sind überlappende Ränder vorgesehen. Die Art der Verbindung der Tragstruktur mit Innenschale und Außenhaut und das Problem der Türdichtungen ist hierbei nicht angesprochen.

Der Erfindung liegt die Aufgabe zu Grunde, ein neues Tür- und Dichtungskonzept vorzuschlagen, bei dem die o. g. Probleme nicht bestehen und insbesondere die Montage vereinfacht sowie die Steifigkeit erhöht wird..

Die Lösung dieser Aufgabe ist im Patentanspruch 1 beschrieben. Die Unteransprüche 2 bis 9 enthalten sinnvolle Ausführungsformen dazu.

Erfindungsgemäß wird die Tür in ein Außen- und ein Innenmodul aufgeteilt. Das Außenmodul besteht aus dem Türaußenblech und einem innen daran befestigten Verbindungsblech mit integrierten oder nachträglich hinzufügbaren Verstärkungsteilen, wobei das Verbindungsblech die mit der Karosserie verbindbaren Türscharniere trägt. Integriert sein können dabei die Fensterschachtverstärkung und weitere Verstärkungsteile wie Türschamierverstärkung und Seitenaufprallschutz. Das Innenmodul besteht aus einem Türinnenblech und dem damit verbundenen Schließblech, wobei diese beiden Teile den Fensterrahmen umschließen. Das Innenblech hat eine umlaufende Profilierung zur Aufnahme einer aufsteckbaren Türdichtung. Es kann außerdem entsprechende Aufnahmemöglichkeiten für die Türaggregate wie z. B. Fensterscheiben, Fensterbetätigung und den Seitenairbag besitzen. Die Trennlinie zwischen Außenmodul und Innenmodul verläuft erfindungsgemäß entlang der Dichtungsebene der türseitigen Türdichtung. Nach getrennter Fertigung, insbesondere getrennter Lackierung und Ausstattung des Innenmoduls mit den Türaggregaten können Außen- und Innenmodul erfindungsgemäß durch Verschrauben, Nieten, Kleben oder in ähnlicher Weise miteinander verbunden und nach Anbringung der umlaufenden Türdichtung an der Karosserie positionsgenau befestigt werden.

Durch das Aufteilen bzw. Trennen des konventionellen Innenbleches (vgl. Fig. 7) in ein Verbindungsblech, das mit dem Türaußenblech verbunden wird und ein Innenblech, das mit dem Schließblech verbunden wird und Aufnahmemöglichkeiten für die Türaggregate besitzt, ist der Einsatz besonderer Werkstoffe, wie hochfester Stahl, Aluminium oder Tailored Blanks, auch die Kombination verschiedener dieser Werkstoffe, wesentlich einfacher zu realisieren, da die Blechteile wegen der geringeren Ziehtiefe umformtechnisch weniger beansprucht sind.

Durch den neuen modularen Aufbau der Tür wird die von den Automobilherstellern zunehmend gewünschte Strategie des Zukaufes kompletter Türen praktisch umsetzbar. Die Integration bestimmter Verstärkungsteile in das Verbindungsblech des Außenmoduls kann die Anzahl der für die benötigten Blechteile reduziert werden.

Es hat sich als günstig erwiesen, am Innenblech insbesondere durch Tiefziehen ein umlaufendes Befestigungsprofil für eine aufsteckbare Türdichtung anzuformen. Dieses Befestigungsprofil ist dabei vorzugsweise im Querschnitt im Wesentlichen U-förmig ausgebildet und besitzt am äußeren Ende zum Festhalten der Türdichtung einen kurzen im Wesentlichen rechtwinklig nach innen umgeformten Rand. Durch das am Innenblech angezogene Befestigungsprofil wird eine Alternative zum Kleben der türseitigen Dichtung ermöglicht, indem diese auf einfache Weise aufgesteckt und dauerhaft gehalten wird. Im Vergleich zum Kleben ist diese Art der Dichtung mit geringeren Herstellungs- und Montagekosten verbunden. Außerdem können bei Verzicht auf die angeklebte türseitige Dichtung auch sog. schmutzabweisende Lacke oder ähnliche Lacke eingesetzt werden, die ein Kleben der Dichtung nicht mehr ermöglichen.

Zur Verbindung von Außen- und Innenmodul ist erfindungsgemäß eine lösbare Schraub- oder Nietverbindung, vorzugsweise unter Zwischenschaltung eines Stützklebers vorgesehen, die im Bereich der Ränder des Verbindungsbleches des Außenmoduls und des Befestigungsprofils am Türinnenblech des Innenmoduls angeordnet ist. Dazu besitzt das U-förmige Befestigungsprofil an der Basis eine ebene Auflagefläche.

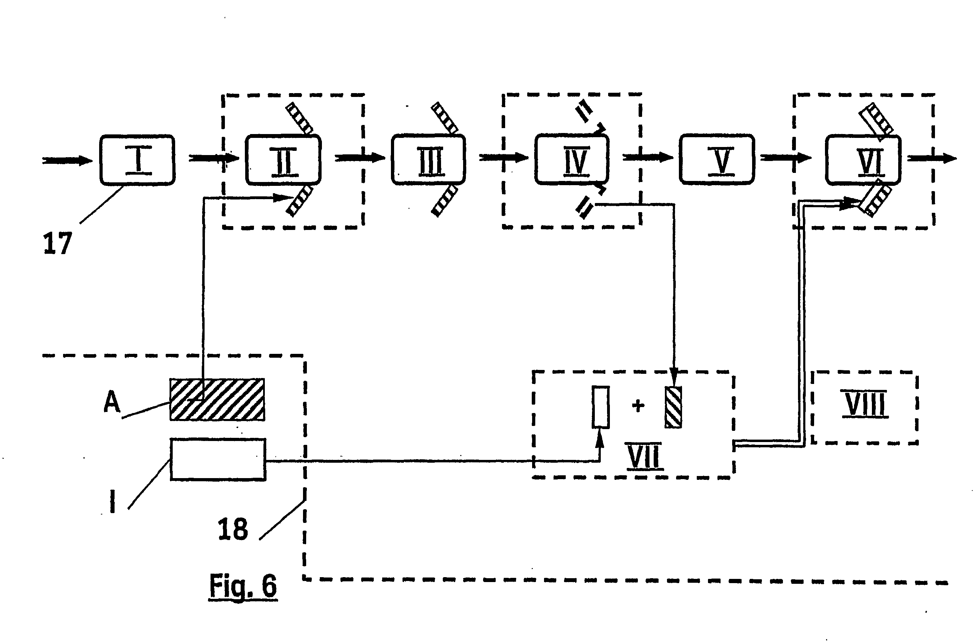

Durch eine lösbare Verbindung zwischen Außenblech und Verbindungsblech innerhalb des Außenmoduls ist es auch möglich, eine nicht lösbare Verbindung zwischen Außenmodul und Innenmodul einzusetzen. Dann könnte ebenfalls die in Figur 6 dargestellte Montagelinie eingesetzt und im Falle einer Reparatur nur das Außenblech ausgetauscht werden.

Die einzelnen Teile von Innenmodul und Außenmodul können jeweils bevorzugt durch Laserschweißen oder -löten dauerhaft miteinander verbunden werden. Das gilt insbesondere für die Verbindung des Türinnenblechs mit dem Schließblech und dem Verstärkungsblech der B-Säule. In ähnlicher Weise können auch die Verstärkungsteile mit dem Verbindungsblech des Außenmoduls und das Verbindungsblech selbst mit dem Türaußenblech verbunden werden. Verbindungsblech und Türaußenblech können aber auch durch Falzen, Kleben oder ähnliche Verfahren miteinander verbunden werden.

Zusammengefaßt ergeben sich folgende Vorteile des neuen Tür- und Dichtungskonzeptes gegenüber zum Stand der Technik gehörigen Konzepten:
- Die türseitige Dichtung kann als Extrudat einfach aufgesteckt werden.
- Die Türaggregate sind montagefreundlich ausschließlich am Innenmodul befestigt.
- Das fertig montierte und vorzugsweise getrennt vom Außenmodul lackierte Innenmodul kann an das gemeinsam mit der Karosserie lackierte Außenmodul angeschraubt werden.
- Wenn das Außenblech zusätzlich abnehmbar gestaltet wird, besteht eine höhere Reparatur- und Recyclingfreundlichkeit.
- Mit dem sich über die gesamte Dichtungsfläche erstreckenden Innenblech bestehen im Gegensatz zu einer Steckrahmenlösung keine Abdichtprobleme im Übergangsbereich innen und keine Toleranzprobleme im Fensterrahmenbereich, die Windgeräusche hervorrufen können.
- Es lassen sich ohne weiteres Stahl- und Aluminiumteile kombinieren (Hybrid-Bauweise).
- Die Fugendichtung kann in Befestigung- bzw. Abdeckprofilen integriert werden.

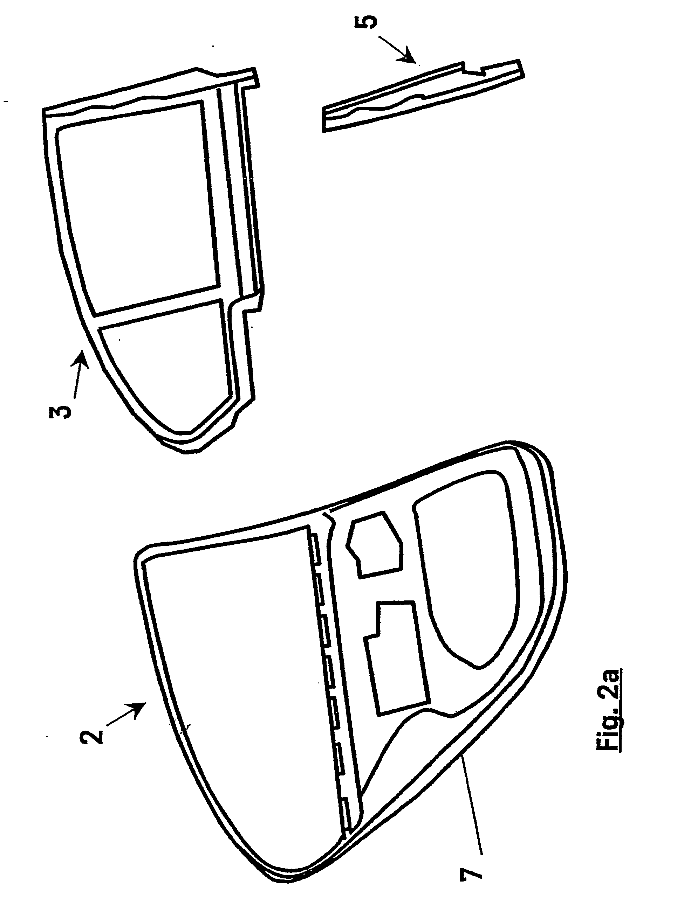

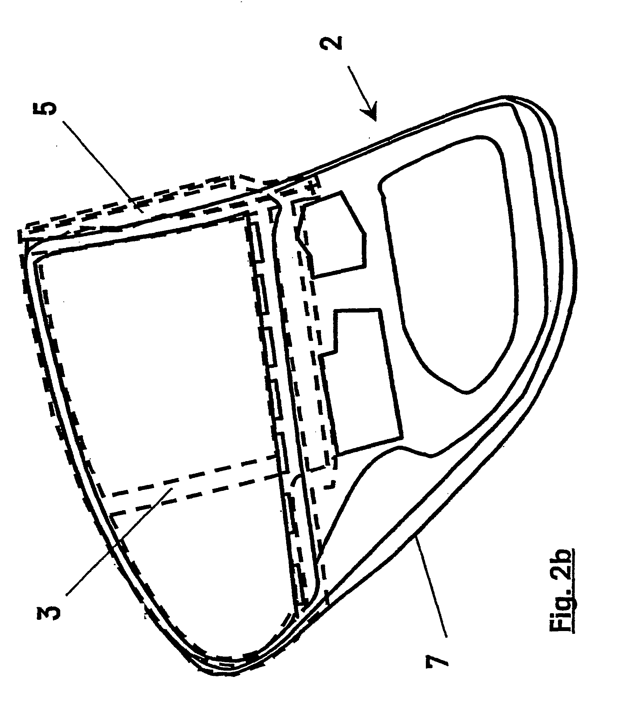

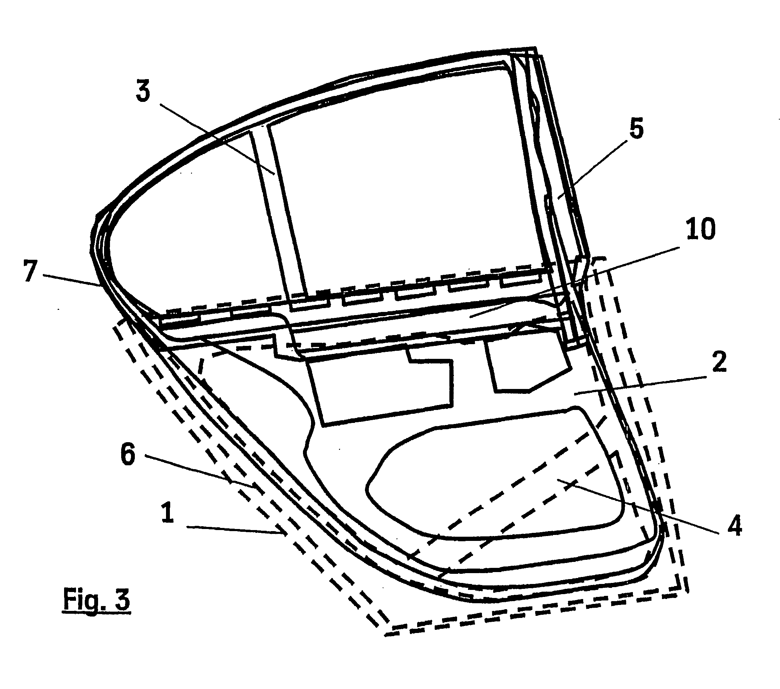

Die Erfindung wird anhand der beigefügten Fig. 1 bis 7 beispielsweise näher Erläutert. Es zeigen
- Fig. 1a und 1b: das Außenblech 1 und Verbindungsblech 6 des Außenmodules vor (Fig. 1a) und nach (Fig. 1b) dem Zusammenfügen,
- Fig. 2a und 2b: das im Wesentlichen aus dem Türinnenblech 2, dem Schließblech 3 und der Verstärkung 5 für die B-Säule bestehende Innenmodul vor (Fig. 2a) und nach (Fig. 2b) dem Zusammenbau,
- Fig. 3: das Außen- und Innenmodul nach dem Zusammenbau, wobei das Außenmodul gestrichelt dargestellt ist,
- Fig. 4: eine Darstellung der zusammengebauten Tür entsprechend Fig. 3, wobei insbesondere die Trennlinie 11 zwischen Außen- und Innenmodul durch die gepunktete Linie dargestellt ist,
- Fig. 5: einen Schnitt durch die Verbindung von Verbindungsblech 6 des Außenmoduls mit dem Türinnenblech 2 des Innenmoduls unter Einbeziehung der türseitigen Türdichtung 7,
- Fig. 6: ein Flußdiagramm zur Montagefolge und
- Fig. 7: die zum Stand der Technik gehörige Ausführung einer Tür.

Die in Fig. 7 dargestellten Einzelteile Türaußenblech 1, Schließblech 3, Verstärkung 4, Verstärkung 8 für Türschamier und Verstärkungsblech 10 für den Bereich des Fensterschachtes sind im Wesentlichen identisch mit den Elementen, die bei der erfindungsgemäßen Tür eingesetzt werden. Lediglich das zum Stand der Technik gehörige Türinnenblech 2' ist wesentlich stabiler ausgebildet und besitzt in Fahrzeugquerrichtung eine erhebliche Ziehtiefe. Die Verstärkungsteile 4, 8 und 10 werden üblicherweise mit dem Türinnenblech 2' vorzugsweise durch Schweißen fest verbunden, während insbesondere das Türaußenblech 1 und meist auch das Schließblech 3 durch Falzen mit dem Türinnenblech 2' verbunden werden.

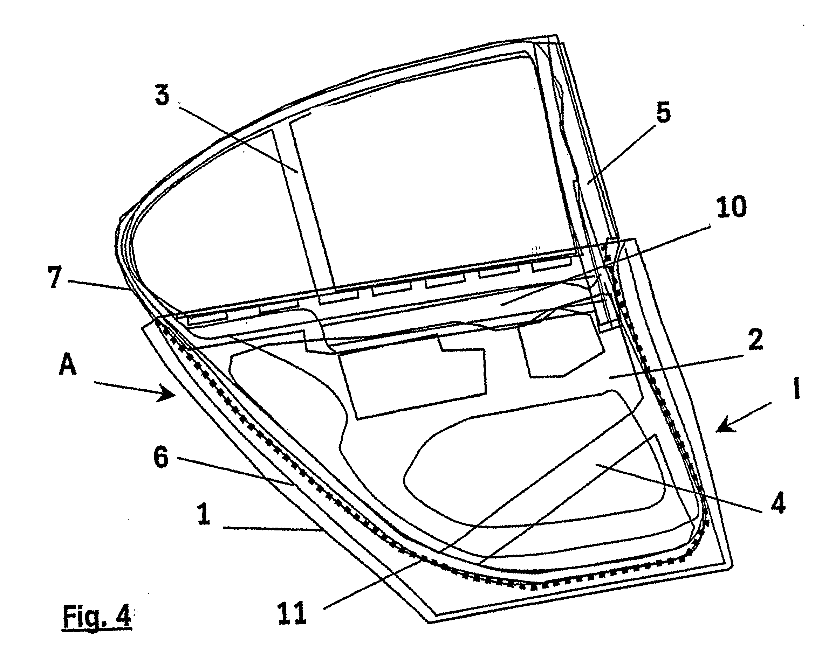

Bei der erfindungsgemäßen Tür werden demgegenüber Außenmodul und Innenmodul getrennt voneinander hergestellt bzw. zusammengefügt, wobei wie insbesondere aus Fig. 4 ersichtlich ist die Trennlinie 11 zwischen Außenmodul A und Innenmodul I in einem Bereich verläuft, der in Fahrzeugquerrichtung etwa auf der halben Breite des ursprünglichen Türinnenblechs 2' liegt. Das Türaußenmodul A besteht aus einem rahmenartigen Verbindungsblech 6, dessen Rahmen an drei Seiten entlang der Dichtungslinie verläuft und im oberen Bereich aus dem waagerechten Verstärkungsblech 10 für den Fensterschacht besteht.

Das Innenmodul besteht insbesondere aus dem im Vergleich zum Stand der Technik relativ schmale Türinnenblech 2, das durch Laserschweißen oder -löten mit dem Schließblech 3 und der Verstärkung 5 für die B-Säule verbunden wird und eine umlaufende türseitige Türdichtung 7 besitzt. Im Innenbereich besitzt das Türinnenblech 2 nicht näher erläuterte Aufnahmemöglichkeit für die Türaggregate.

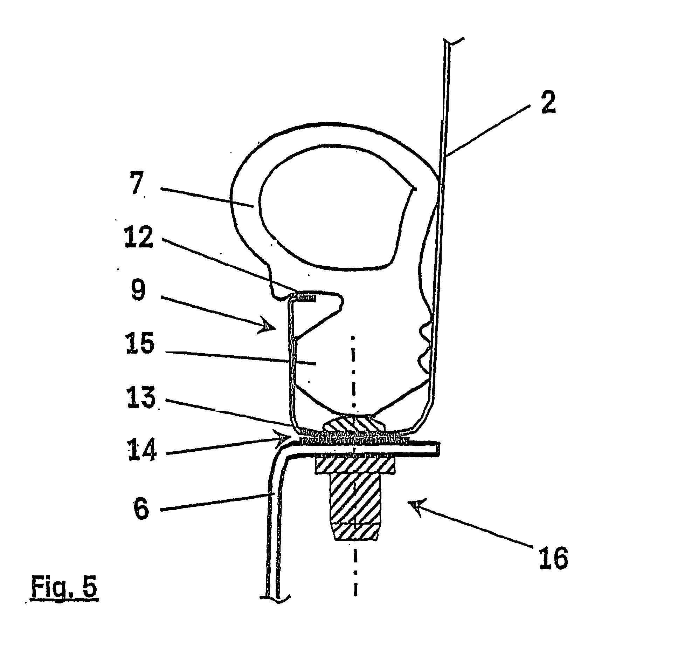

Aus Fig. 5 ist die besondere Ausbildung des an das Verbindungsblech 6 angezogenen Befestigungsprofils 9 für die aufsteckbare Türdichtung 7 dargestellt. Das Befestigungsprofil 9 ist U-förmig ausgebildet und besitzt eine ebene Basisfläche 13 zur Befestigung des Verbindungsbleches 6 über eine Schraubverbindung 16 mit dem Türinnenblech 2. Zusätzlich kann dabei eine Klebeverbindung 14 zwischengeschaltet werden. Die Türdichtung 7 besitzt zur Abdichtung gegenüber dem Türrahmen ein Hohlprofil. Zur dauerhaften Fixierung der Türdichtung 7 wird ein Klemmteil 15 mit Hilfe des Randes 12 innerhalb des U-förmigen Befestigungsprofils 9 gehalten.

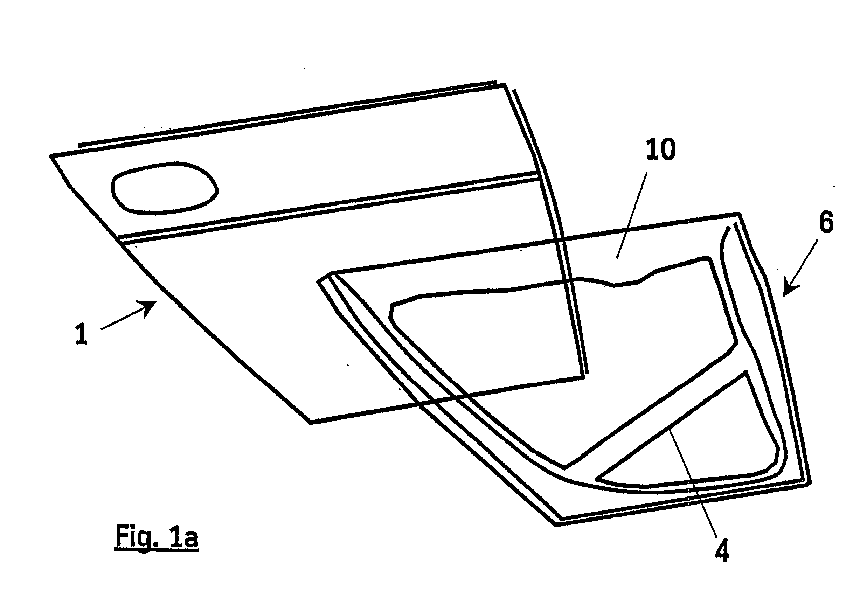

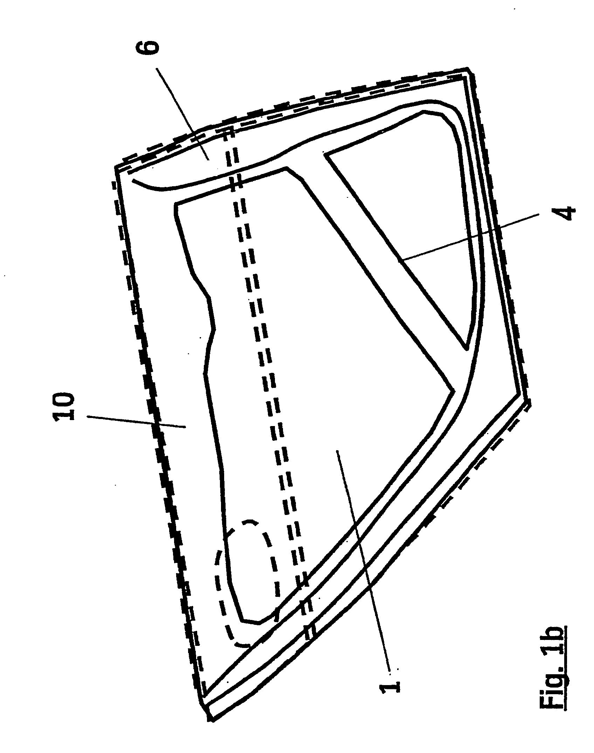

In Fig. 6 sind schematisch verschiedene Stationen I bis VIII zur Montage der Tür an einer Karosserie 17, die auf einer Fördereinrichtung transportiert wird, dargestellt. In der Station I findet der übliche Zusammenbau der Karosserie (Framing) statt. In der Station II wird das vorgefertigte Außenmodul A (vgl. Fig. 1b) an die Karosserie 17 angeschraubt, wobei auch bereits die Scharniere eingestellt werden. In der Station III werden Karosserie 17 und Außenmodul A gemeinsam lackiert. Danach kann in der Station IV durch Trennen des Scharniers das Außenmodul A wieder von der Karosserie 17 getrennt werden und zum Zusammenbau mit dem von außen angelieferten Innenmodul I in die Station VII gebracht werden. Gleichzeitig kann in der Station V die Inneneinrichtung in die Karosserie 17 eingebracht werden. Nach Verbindung von Außenmodul A und Innenmodul I durch eine Schraub- oder Nietverbindung (vgl. Fig. 5) wird in der Station VIII die umlaufende Türdichtung 7 auf das Befestigungsprofil 9 aufgesteckt und in der Station VI werden schließlich die kompletten Türen an die Karosserie angebaut.

### Bezugszeichenliste:

- 1: Türaußenblech
- 2, 2': Türinnenblech
- 3: Schließblech
- 4: Verstärkung an 6 (Seitenaufprallträger)
- 5: Verstärkung für B-Säule
- 6: Verbindungsblech
- 7: Türdichtung
- 8: Verstärkung für Türschamier
- 9: Befestigungsprofil
- 10: Verstärkungsblech (im Bereich des Fensterschachtes)
- 11: Trennlinie zwischen A und I
- 12: Rand an 9
- 13: Basis von 9
- 14: Klebeverbindung
- 15: Klemmteil von 7
- 16: Schraubverbindung
- 17: Karosserie
- 18: Abgrenzung der Montagestationen nach außen

- A: Außenmodul
- I: Innenmodul

### Stationen für Türmontage:

- I: Zusammenbau der Karosserie (Framing)
- II: Montage von A an 17 (einschl. Scharniereinstellung)
- III: Lackierung von 17 und A
- IV: Demontage von A durch Trennen des Scharniers
- V: Montage der Inneneinrichtung in die Karosserie
- VI: Anbau der kompletten Tür
- VII: Zusammenbau von A und I
- VIII: Montage der Dichtung

## Patentansprüche

1. Tür für Kraftfahrzeuge mit einem Türaußenblech und einem Türinnenblech, wobei
- die Tür ein Außen- (A) und ein Innenmodul (I) besitzt,
- das Außenmodul (A) und Innenmodul (I) durch Verschrauben, Nieten Kleben oder in ähnlicher Weise miteinander verbindbar sind,
- das Innenmodul (I) Aufnahmemöglichkeiten für die Türaggregate wie z.B. Fensterscheibe, Scheibenbetätigung, Seitenairbag besitzt,
- das Außenmodul (A) aus dem Türaußenblech (1) und einem innen daran befestigten Verbindungsblech (6) besteht und das Verbindungsblech (6) integrierte oder nachträglich hinzufügbare Verstärkungsteile (4,8,10) besitzt,
**dadurch gekennzeichnet, dass**
- das mit dem Türaußenblech (1) verbundene Verbindungsblech (6) lösbar die mit der Karosserie (17) verbindbaren Türscharniere trägt,
- das Innenmodul (I) aus einem Türinnenblech (2) und zumindest einem damit verbundenen Schließblech (3) besteht,
- Türinnenblech (2) und Schließblech (3) den Fensterrahmen umschließen,
- das Türinnenblech (2) ein umlaufendes Befestigungsprofil (9) für eine aufsteckbare Türdichtung (7) besitzt und
- die Trennlinie zwischen Außenmodul (A) und Innenmodul (I) entlang der Dichtungsebene der türseitigen Türdichtung (7) verläuft.

2. Tür nach Anspruch 1, **dadurch gekennzeichnet, dass** das umlaufende Befestigungsprofil (9) durch Tiefziehen an das Innenblech (2) angeformt ist.

3. Tür nach Anspruch 1 oder 2, **dadurch gekennzeichnet, dass** das umlaufende Befestigungsprofil (9) im Querschnitt im Wesentlichen U-förmig ausgebildet ist und am äußeren Ende zum Festhalten der Türdichtung (7) einen kurzen im Wesentlichen rechtwinklig nach innen umgebogenen Rand (12) besitzt.

4. Tür nach Anspruch 1, 2 oder 3, **dadurch gekennzeichnet, dass** die Basis (13) des U-förmigen Befestigungsprofils (9) eine ebene Auflagefläche für die Verbindung mit dem Verbindungsblech (6) des Außenmoduls (A) besitzt.

5. Tür nach Anspruch 4, **dadurch gekennzeichnet, dass** die Verbindung des Befestigungsprofils (9) mit dem Verbindungsblech (6) aus einer Schraub- oder Nietverbindung (16) und zusätzlich einer Klebeverbindung (14) besteht.

6. Tür nach Anspruch 1, **dadurch gekennzeichnet, dass** Türinnenblech (2) und das den Fensterrahmen umfassende Schließblech (3) sowie das Verstärkungsblech (5) für die B-Säule durch Laserschweißen oder -löten miteinander verbunden sind.

7. Tür nach Anspruch 1, **dadurch gekennzeichnet, dass** das Außenmodul (A) gemeinsam mit der Karosserie (17) und das Innenmodul (I) getrennt davon lackiert wird.

8. Tür nach Anspruch 1, **dadurch gekennzeichnet, dass** das Verbindungsblech (6) des Außenmoduls (A) einen umlaufenden im Querschnitt profilierten Rahmen besitzt.

9. Tür nach Anspruch 8, **dadurch gekennzeichnet, dass** der umlaufende Rahmen U-förmig entlang der Türdichtung (7) verläuft und im oberen Bereich aus dem im Bereich des Fensterschachtes angeordneten Verstärkungsblech (10) besteht.

## Claims

1. A door for motor vehicles with a door outer plate and a door inner plate, wherein
- the door has an outer module (**A**) and inner module (**I**)
- the outer module (**A**) and inner module (**I**) can be connected to each other by screws, rivets, and adhesives or in a similar manner;
- the inner module (**I**) has means for accommodating door aggregates, e.g. window pane, side window handles, side airbag;
- the outer module (A) is comprised of a door outer plate (**1**) and a connecting plate (**6**) affixed thereto, and wherein said connecting plate (**6**) has integrated or retro-fittable reinforcing parts (**4,8,10**);
**characterized in that**
- the connecting plate (**6**) connected to the door outer plate (**1**) carries the door hinges connectible to the car body (**17**) in a detachable configuration;
- the inner module (**I**) is comprised of the door inner plate (**2**) and at least of a locking plate (**3**) connectible thereto
- the door inner plate (**2**) and locking plate (**3**) encompass the window frame;
- the door inner plate (**2**) has a circumferential fixing profile (**9**) for a door seal (**7**) that can be plugged-on; and
- the separation line between the outer module (**A**) and inner module (**I**) extends along the sealing plane of the door-side door seal (**7**).

2. A door pursuant to Claim 1, **characterized in that** the circumferential fixing profile (**9**) is formed by deep-drawing technique to the inner plate (**2**)

3. A door as claimed in any of Claims 1 or 2, **characterized in that** the circumferential fixing profile (**9**) in its cross-section is mainly configured like a U-shape and has a short, mainly rectangular rim (**12**) bent towards the inside, which is located at its outer end to retain said door seal (**7**).

4. A door as claimed in any of Claims 1, 2, or 3, **characterized in that** the basis (**13**) of the U-shaped fixing profile (**9**) has a level and plane support surface for connection with the connecting plate (**6**) of the outer module (**A**).

5. A door pursuant to Claim 4, **characterized in that** the connection of the fixing profile (**9**) with the connecting plate (**6**) is comprised of a screw or rivet connection (**16**) and, additionally, of an adhesive connection (**14**).

6. A door pursuant to Claim 1, **characterized in that** the door inner plate (**2**) and the locking plate (**3**), which encompasses the window frame, as well as the reinforcing plate (**5**) for the B-column are connected with each other by laser welding or laser soldering.

7. A door pursuant to Claim 1, **characterized in that** the outer module (**A**) is lacquered jointly with the car body (**17**), and that the inner module (**I**) is lacquered separately thereof.

8. A door pursuant to Claim 1, **characterized in that** the connecting plate (**6**) of the outer module (**A**) has a circumferential frame, which is profiled in its cross-section.

9. A door pursuant to Claim 8, **characterized in that** the circumferential frame extends in U-shape along the door seal (**7**) and that it is comprised of a reinforcing plate (**10**), which is arranged in the area of the window shaft.

## Revendications

1. Portière d'automobile avec une tôle extérieure de portière et une tôle intérieure de portière,
- la portière possédant un module extérieur (A) et un module intérieur (I),
- le module extérieur (A) et le module intérieur (I) pouvant être assemblés l'un à l'autre par vissage, rivetage, collage ou autre,
- le module intérieur (I) possédant des possibilités de logement pour les groupes de la portière, tels que vitre, commande de la vitre, coussin gonflable de sécurité latéral,
- le module extérieur (A) étant constitué par la tôle extérieure de portière (1) et une tôle de raccordement (6) qui y est fixée à l'intérieur et la tôle de raccordement (6) possédant des éléments de renforcement (4, 8, 10) intégrés ou ajoutés plus tard,
**caractérisée en ce que**
- la tôle de raccordement (6) assemblée à la tôle extérieure de portière (1 ) porte les charnières de portière à raccorder à la carrosserie (17) de manière détachable,
- le module intérieur (I) est constitué d'une tôle intérieure de portière (2) et d'au moins une tôle de fermeture (3) qui y est reliée,
- la tôle intérieure de portière (2) et la tôle de fermeture (3) entourent le cadre de la vitre,
- la tôle intérieure de portière (2) possède un profilé de fixation (9) périphérique pour un joint d'étanchéité (7) à insérer et
- la ligne de séparation entre le module extérieur (A) et le module intérieur (I) se déploie le long du plan du joint d'étanchéité (7) de la portière côté portière.

2. Portière selon la revendication 1, **caractérisée en ce que** le profilé de fixation périphérique (9) est formé par emboutissage pour être adapté à la tôle inférieure (2).

3. Portière selon la revendication 1 ou 2, **caractérisée en ce que** le profilé de fixation (9) se présente pour l'essentiel en forme de U dans la section et possède à l'extrémité extérieure un bord (12) court, plié vers l'intérieur essentiellement à angle droit pour fixer le joint d'étanchéité (7).

4. Portière selon la revendication 1, 2 ou 3, **caractérisée en ce que** la base (13) du profilé de fixation (9) en forme de U possède une surface d'appui plane pour le raccordement avec la tôle de raccordement (6) du module extérieur (A).

5. Portière selon la revendication 4, **caractérisée en ce que** le raccordement du profilé de fixation (9) avec la tôle de raccordement (6) consiste en un assemblage par vissage ou rivetage (16) et en plus un assemblage collé (14).

6. Portière selon la revendication 1, **caractérisée en ce que** la tôle intérieure de portière (2) et la tôle de fermeture (3) entourant le cadre de la vitre ainsi que la tôle de renforcement (5) pour la colonne B sont assemblées les unes aux autres par soudage ou brasage au laser.

7. Portière selon la revendication 1, **caractérisée en ce que** le module extérieur (A) est peint avec la carrosserie (17) et que le module intérieur (I) est peint séparément.

8. Portière selon la revendication 1, **caractérisée en ce que** la tôle de raccordement (6) du module extérieur (A) possède un cadre périphérique profilé dans la section.

9. Portière selon la revendication 8, **caractérisée en ce que** le cadre périphérique en forme de U se déploie le long du joint de la portière (7) et est constitué dans la zone supérieure par la tôle de renforcement (10) disposée au niveau du logement de la vitre.
